Europäisches Patentamt

European Patent Office

Office européen des brevets

(19)

(11) Veröffentlichungsnummer : **0 347 620 B1**

## EUROPÄISCHE PATENTSCHRIFT

(12)

(45) Veröffentlichungstag der Patentschrift :
**07.10.92 Patentblatt 92/41**

(51) Int. Cl.$^5$ : **B01D 29/50**

(21) Anmeldenummer : **89109794.1**

(22) Anmeldetag : **31.05.89**

(54) Druckfilter.

(30) Priorität : **18.06.88 DE 3820678**
**26.04.89 DE 3913744**

(43) Veröffentlichungstag der Anmeldung :
**27.12.89 Patentblatt 89/52**

(45) Bekanntmachung des Hinweises auf die
Patenterteilung :
**07.10.92 Patentblatt 92/41**

(84) Benannte Vertragsstaaten :
**AT BE CH DE ES FR GB GR IT LI LU NL SE**

(56) Entgegenhaltungen :
**DE-B- 1 134 659**
**FR-A- 2 419 744**
**GB-A- 2 172 518**
**US-A- 4 482 461**
**US-A- 4 482 461**

(73) Patentinhaber : **Krupp Koppers GmbH**
**Altendorfer Strasse 120**
**W-4300 Essen 1 (DE)**

(72) Erfinder : **Giese, Manfred**
**Velberter Strasse 52**
**W-4300 Essen 16 (DE)**
Erfinder : **Wacker, Wolfgang**
**Meisenweg 1**
**W-4300 Essen 17 (DE)**

## Beschreibung

Die Erfindung betrifft einen Druckfilter, bestehend aus zwei oder mehreren, jeweils in einem Einzelrohr vertikal angeordneten und von der zu filtrierenden Flüssigkeit von außen nach innen durchflossenen Filterelementen, wobei die an ihrem unteren Ende offenen Einzelrohre in einen gemeinsamen Abschluß münden, der mit der Eintrittsleitung für die zu filtrierende Flüssigkeit in Verbindung steht.

Ein Druckfilter der genannten Art ist aus der US-A-4 482 461 bekannt. Hierbei handelt es sich um ein rückspülbares Filter, bei dem während des Filterbetriebes im Turnus jeweils ein Filterelement durch rückwärtiges Spülen mit Filtrat freigespült werden soll. Die Rohre für die einzelnen Filterelemente sind dabei auf einem Kreisring angeordnet, unter dem sich ein gekrümmtes Rohr um die Filterlängsachse dreht. Sobald dieses gekrümmte Rohr und eines der Rohre, in denen sich die einzelnen Filterelemente befinden, zentrisch übereinander stehen, wird durch öffnen eines Ventiles der Rückspülvorgang eingeleitet. Da der Druck hinter dem Ventil kleiner ist als der Filtratdruck, fließt das Filtrat dabei von innen nach außen durch das Filterelement und spült dadurch den auf dem Filterelement anhaftenden Filterkuchen ab.

Sowohl bei der Konstruktion nach der US-A-4 482 461 als auch bei anderen bekannten Konstruktionen wird das aus den einzelnen Filterelementen abgezogene Filtrat zunächst in einen Filtratsammelbehälter überführt und von dort über eine Sammelleitung abgezogen. Bei dieser Anordnung ist es nicht ohne weiteres möglich, ein defektes Filterelement zu lokalisieren. Bei einem Defekt muß daher das gesamte Filter still-gesetzt und zur Montage, Demontage und/oder Reparatur auch nur eines einzigen defekten Filterelementes muß hierbei immer die komplette Behälterhaube demontiert werden. Dazu sind folgende Arbeitsgänge notwendig:

– Demontage von anschließenden Rohrleitungen,

– Lösen aller Schrauben der Flanschverbindungen,

– Abheben der Behälterhaube mittels eines Hebezeuges bzw. eines am Filterbehälter angebauten Galgens,

– Schwenken bzw. Absetzen der Behälterhaube (großer Platzbedarf),

– Entfernen der alten Mantelflanschdichtungen,

– Säuberung der Mantelflanschdichtflächen,

– Einsetzen einer neuen Mantelflanschdichtung.

Nach Vornahme des Austausches des Filterelementes bzw. nach dessen Reparatur muß die Behälterhaube wieder auf den Behälter aufgesetzt, und die notwendigen Schraub- und Flanschverbindungen müssen wieder hergestellt werden. Es liegt auf der Hand, daß dies insgesamt gesehen ein ziemlich aufwendiger Arbeitsvorgang ist, der außerdem einen nicht unerheblichen Platzbedarf erfordert.

Ein weiterer Nachteil der bekannten Druckfilter ist darin zu sehen, daß bei ihnen die Zahl der Filterelemente und somit die installierte Filterfläche von vornherein festgelegt ist. Eine Anpassung der Filterfläche an sich ändernde Betriebsbedingungen, das heißt an sich ändernde Mengen der zu filtrierenden Flüssigkeit, ist deshalb nicht möglich. Wird diese Menge kleiner als ursprünglich vorgesehen, so verringert sich die Strömungsgeschwindigkeit im Filter. Dies kann bei bestimmten Feststoffen zu einer Sedimentation im Filter führen. Wird diese Menge dagegen größer als ursprünglich vorgesehen, so kann die Anpassung der Filterfläche an den gestiegenen Bedarf nur durch die Installierung zusätzlicher Filter erfolgen. Dies führt in den meisten Fällen jedoch zu unterschiedlichen Filtergrößen und bedingt häufig eine schlechte Raumausnutzung des Aufstellungsplatzes sowie eine ungünstige Rohrleitungsführung.

Der Erfindung Liegt deshalb die Aufgabe zugrunde, einen Druckfilter zu schaffen, der sich gegenüber bekannten Konstruktionen durch folgende Vorteile auszeichnet:

Ein Auswechseln und/oder Reparieren einzelner Filterelemente ist ohne Betriebsstillstand der gesamten Filteranlage und ohne Demontage einer Behälterhaube möglich,

und

eine Anpassung der Filterfläche an veränderte Mengen der zu filtrierenden Flüssigkeit ist unter optimaler Raumausnutzung des Aufstellungsplatzes möglich, ohne daß eine bauliche Veränderung der vorhandenen Filteranlage notwendig ist.

Diese Aufgabe wird gelöst durch einen Druckfilter der eingangs genannten Art, der erfindungsgemäß dadurch gekennzeichnet ist, daß die Einzelrohre in maximaler Packungsdichte miteinander fest verbunden sind und jedes Filterelement über eine eigene, ihm zugeordnete Austrittsleitung mit der außerhalb des Druckfilters angeordneten Filtratsammelleitung verbunden ist.

Das heißt, beim erfindungsgemäßen Druckfilter besteht der Filterbehälter aus Einzelrohren, deren Zahl jeweils der Zahl der verwendeten Filterelemente entspricht, so daß jedes Filterelement in einem Einzelrohr untergebracht ist. Die Einzelrohre können dabei sowohl einen runden als auch einen ovalen oder eckigen Querschnitt, z.B. als Dreieck-, Viereck- oder Sechseckrohre, aufweisen. Zwei oder mehrere Einzelrohre werden hierbei zu einer baulichen Einheit zusammengefaßt, wobei diese Einzelrohre fest miteinander verbunden sind und mit ihrem unteren offenen Ende in einen gemeinsamen Abschluß münden. Eine derartige Filtereinheit bildet gewissermaßen den Grundkörper.

Erfindungsgemäß kann der Druckfilter in Modulbauweise aus mehreren derartiger Grundkörper zusammengesetzt sein, wobei die einzelnen Module getrennt voneinander zu- und abschaltbar sind. Dadurch gelingt es, die Filterleistung der jeweils anfallenden Menge der zu filtrierenden Flüssigkeit anzupassen, ohne daß irgendwelche baulichen Veränderungen an der Filteranlage vorgenommen werden müssen.

Weitere Einzelheiten der erfindungsgemäßen Konstruktion ergeben sich aus den vorliegenden Unteransprüchen und sollen nachfolgend an Hand der Abbildungen erläutert werden. Hierbei zeigen:

Fig. 1 einen Längsschnitt durch einen erfindungsgemäßen Druckfilter, wobei der gemeinsame Abschluß als Konus ausgebildet ist,

Fig. 2 einen Querschnitt durch den Druckfilter gemäß Fig. 1,

Fig. 3 einen Längsschnitt durch eine andere Ausführungsform des Druckfilters, die einen rechteckigen Querschnitt aufweist,

Fig. 4 eine Seitenansicht des Druckfilters gemäß Fig. 3,

Fig. 5 das Detail "A" in Fig. 1 und 3,

Fig. 6 das Detail "B" in Fig. 1 und 3 und

Fig. 7 einen Längsschnitt durch eine weitere Ausführungsform des Druckfilters, wobei der gemeinsame Abschluß korbbogenförmig ausgebildet und mit einem Austragsschaber ausgerüstet ist.

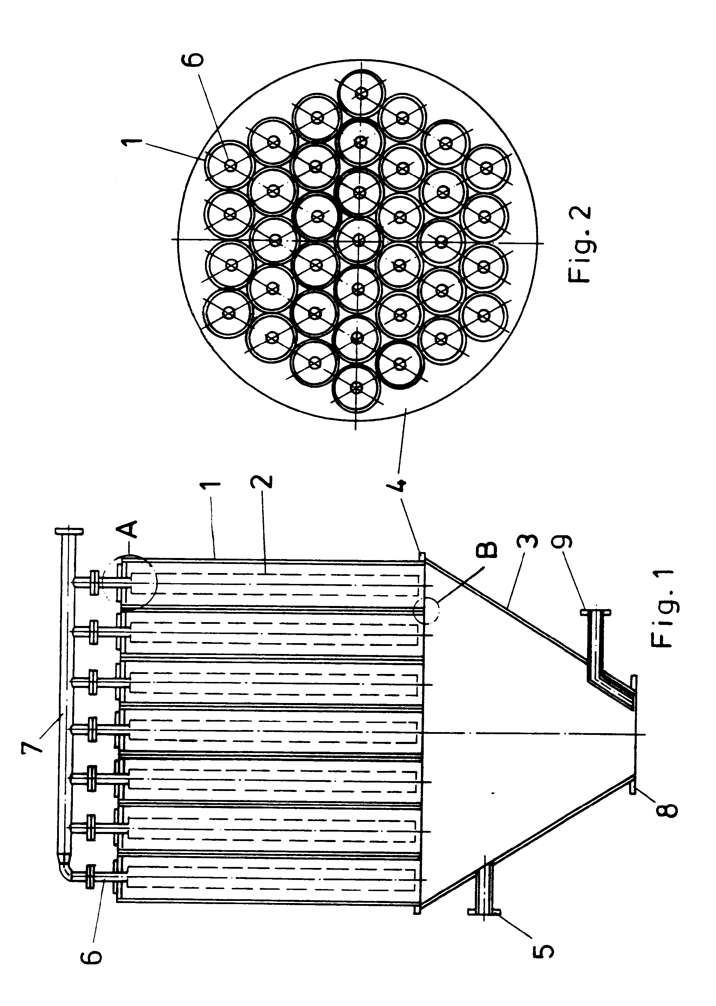

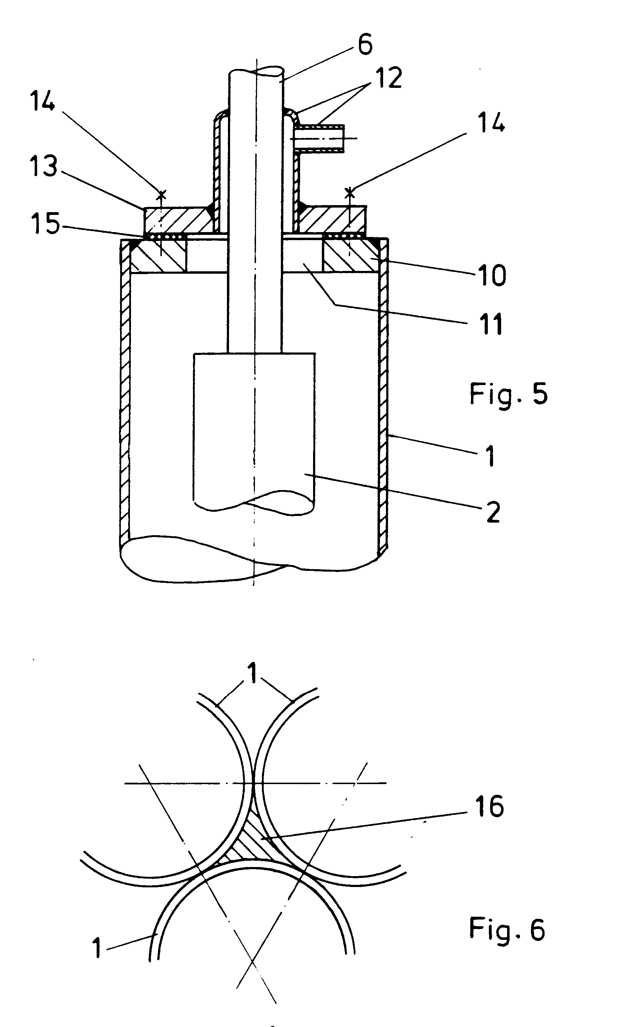

Bei dem in Fig. 1 dargestellten Druckfilter ist der Filterbehälter aus einer Vielzahl von Einzelrohren 1 zusammengesetzt, in denen sich jeweils ein Filterelement (Filterkerze) 2 befindet. Hierbei kann es sich um ein Filterelement herkömmlicher Bauart handeln, auf dessen konstruktive Einzelheiten hier nicht näher eingegangen zu werden braucht, da dies nicht Gegenstand der vorliegenden Erfindung ist. Das Filterelement 2 wird dabei von oben in das jeweilige Einzelrohr 1 eingeführt und ist mit diesem druckdicht verbunden. Auf dieses Detail "A" wird weiter unten im Zusammenhang mit Fig. 5 noch näher eingegangen werden. Die unten offenen Einzelrohre 1 münden in den Abschluß 3, der in diesem Falle als Konus ausgebildet ist. Zur Verbindung zwischen den Einzelrohren 1 und dem Abschluß 3 ist am unteren Ende der Einzelrohre 1 ein Blech 4 angeordnet, welches mit den außenliegenden Einzelrohren 1 und dem Abschluß 3 fest und druckdicht verbunden ist. Die Verbindungen zwischen den Einzelrohren 1 sind ebenfalls fest und druckdicht verschlossen. Auf dieses Detail "B" wird weiter unten im Zusammenhang mit Fig. 6 noch näher eingegangen werden.

Die Wirkungsweise des erfindungsgemäßen Druckfilters unterscheidet sich konzeptionell nicht von der Wirkungsweise bekannter Druckfilter. Die in der Abbildung nicht dargestellte Eintrittsleitung für die zu filtrierende Flussigkeit ist dabei an den Stutzen 5 angeschlossen, über den diese Flüssigkeit in den Filterbehälter eintritt. Unter Druckanwendung wird die Flüssigkeit von außen nach innen durch die Filterelemente 2 gepreßt, wobei das anfallende Filtrat jeweils über die Austrittsleitung 6, die jedem Filterelement 2 zugeordnet ist, abgezogen wird. Die einzelnen Austrittsleitungen 6 münden in die Filtratsammelleitung 7. Über den Stutzen 5 kann auch das erforderliche Waschwasser in den Filterbehälter eingeleitet werden. Der sich auf der äußeren Oberfläche der Filterelemente 2 abscheidende Filterkuchen wird, sobald er die gewünschte Dicke erreicht hat, durch einen Druckstoß entgegen der Filtratfließrichtung von den Filterelementen 2 abgestoßen. Der abgestoßene Filterkuchen sammelt sich im Unterteil des Abschlusses 3 und wird über den Stutzen 8 abgezogen. Über den Stutzen 9 erfolgt die Entleerung des Filterbehälters sowie gegebenenfalls die Restvolumenfiltration.

Fig. 2 zeigt einen Querschnitt durch den in Fig. 1 dargestellten Druckfilter. Aus der Abbildung erkennt man, daß in diesem Falle sowohl die Einzelrohre 1 als auch das Blech 4 mit dem darunter liegenden Abschluß 3 einen kreisförmigen Querschnitt aufweisen. Die Anwendung dieser Ausführungsform ist insbesondere dann angebracht, wenn der erfindungsgemäße Druckfilter nur aus einem einzigen Grundkörper besteht.

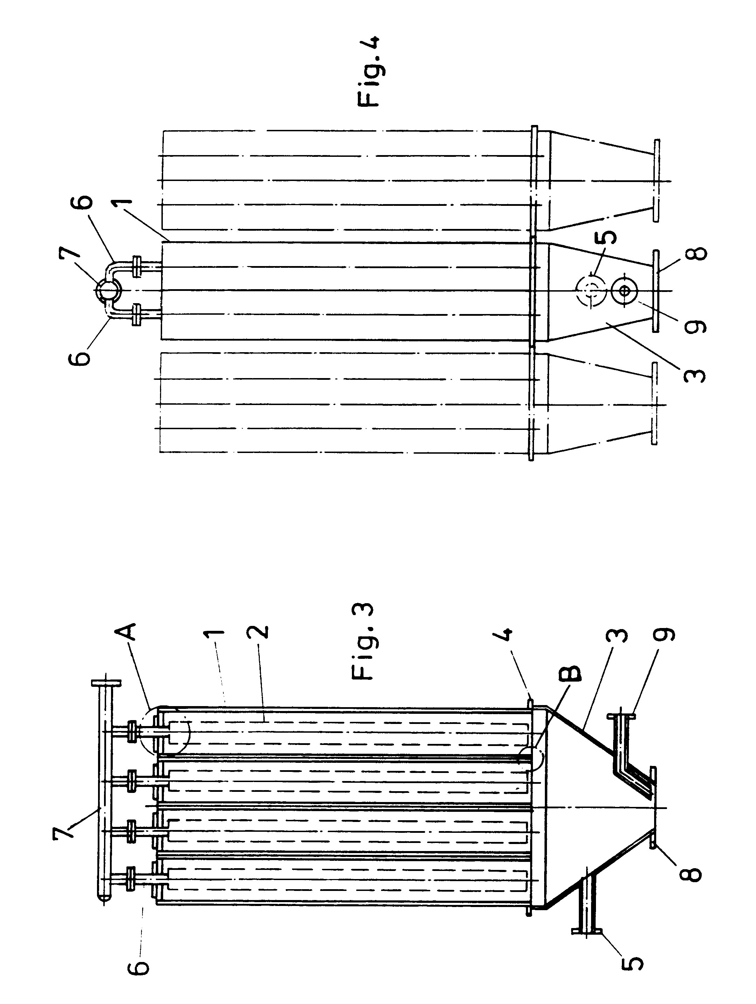

Fig. 3 zeigt einen Längsschnitt durch eine andere Ausführungsform des erfindungsgemäßen Druckfilters, die insbesondere für die Anwendung der Modulbauweise geeignet ist. Selbstverständlich haben hierbei die übereinstimmenden Bezugszeichen die gleiche Bedeutung wie in Fig. 1, so daß hierauf nicht noch einmal eingegangen zu werden braucht. Von der in Fig. 1 dargestellten Ausführungsform unterscheidet sich die hier dargestellte Ausführungsform vor allem dadurch, daß in diesem Falle sowohl die Einzelrohre 1 als auch das Blech 4 mit dem darunter liegenden Abschluß 3 einen rechteckigen Querschnitt aufweisen. Die daraus resultierende kastenförmige Bauweise ermöglicht eine besonders optimale Raumausnutzung des zur Verfügung stehenden Aufstellungsortes, weshalb diese Ausführungsform insbesondere für die Anwendung der Modulbauweise geeignet ist.

Dies wird durch die Fig. 4 verdeutlicht, die eine Seitenansicht der in Fig. 3 dargestellten Ausführungsform zeigt. Die Abbildung läßt erkennen, daß in diesem Falle drei hintereinander angeordnete Module zu einer baulichen Einheit zusammengefaßt sind. Die Anschlüsse für die Flüssigkeitszufuhr und -abfuhr sind dabei nur im mittleren Modul eingezeichnet. Die anderen Module weisen diese Anschlüsse aber ebenfalls auf. Die einzelnen Module sind hierbei getrennt voneinander zu- und abschaltbar, so daß eine große Flexibilität beim Betrieb des dargestellten Druckfilters gegeben ist.

Die Fig. 5 betrifft das Detail "A" in Fig. 1 und 3. Hierbei handelt es sich um die Anordnung und Befestigung der Filterelemente 2 innerhalb der Einzelrohre 1.

Wie diese Abbildung zeigt, ist am oberen Ende des Einzelrohres 1 der innenliegende Flansch 1o angebracht, der eine Öffnung 11 aufweist, deren Durchmesser größer ist als der Durchmesser des verwendeten Filterelementes 2, so daß dieses ohne Schwierigkeiten durch die Öffnung 11 in das Einzelrohr 1 eingeführt werden kann. Das Filterelement 2 ist mit der Austrittsleitung 6 verbunden, die teilweise von dem Domstutzen 12 umgeben ist. An diesem ist außen der Gegenflansch 13 befestigt. Durch die Schrauben 14 oder ähnliche Befestigungsmittel wird das Filterelement 2, nachdem es durch die Öffnung 11 in das Einzelrohr 1 eingeführt worden ist, befestigt. Diese Schrauben 14 verbinden dabei den Gegenflansch 13 mit dem Flansch 1o, wobei die dazwischen liegende Dichtungsscheibe 15 für eine druckdichte Abddichtung sorgt. Der Domstutzen 12 dient der Entlüftung und als Bypass bei stark sedimentierenden Feststoffen sowie der Druckgaszufuhr beim Leerdrücken des Einzelrohres 1.

Fig. 6 zeigt das Detail "B" in Fig. 1 und 3. Dieses Detail betrifft die Abdichtung zwischen den Einzelrohren 1 am unteren Ende dieser Rohre. Man erkennt aus der Abbildung, daß der freie Raum zwischen den Einzelrohren 1 durch entsprechende Zwischenstücke 16 abgedichtet wird, die mit den Einzelrohren 1 druckdicht verschweißt werden. Selbstverständlich muß dabei die Formgebung dieser Zwischenstücke 16 der jeweiligen Formgebung der Einzelrohre genau angepaßt werden.

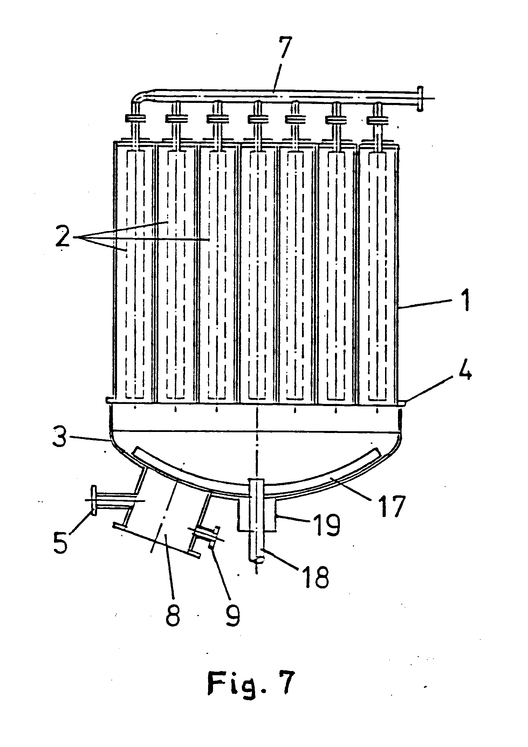

Fig. 7 zeigt schließlich einen Längsschnitt durch eine weitere Ausführungsform des erfindungsgemäßen Druckfilters, die insbesondere zur Abscheidung von Feststoffen mit klebrigen oder schleimigen Eigenschaften geeignet ist. Hierbei ist vorgesehen, daß der Abschluß 3 korbogenförmig ausgebildet und mit einem Austragsschaber 17 ausgerüstet ist. Der Abschluß 3 kann aber auch in Form einer Halbkugel oder einer ähnlichen, im Behälterbau üblichen Bodenform, wie z.B. als sogenannter Klöpperboden, ausgebildet sein. Die Antriebswelle 18 des Austragsschabers 17 wird durch eine unterhalb des Abschlusses 3 angeordnete Lager- und Dichteinheit 19 geführt, so daß der Austragsschaber 17 durch ein außerhalb des Druckfilters befindliches Antriebselement angetrieben werden kann. Hierbei kann es sich um einen Elektromotor, einen Hydromotor oder einen pneumatischen Antrieb handeln. Der Antrieb des Austragsschabers 17 kann schließlich auch durch eine magnetgekuppelte Verbindung erfolgen, wobei die Lagerung des Austragsschabers 17 in diesem Falle innerhalb des Filterbehälters angeordnet ist. Die Abdichtung gegenüber dem Druck im Filter kann in der Lager- und Dichteinheit 19 mittels der in der Technik bekannten Abdichtungssysteme wie Stopfbuchsen, Gleitringdichtungen oder ähnlichem vorgenommen werden. Der Austragsschaber 17 kann ein- oder mehrflügelig ausgeführt werden. Der sich am Boden des Abschlusses 3 sammelnde Filterkuchen wird in diesem Falle durch die Drehbewegung des Austragsschabers 17 in den Stutzen 8 geschoben, über den der abgeschiedene Feststoff aus dem Druckfilter entfernt werden kann. Über den Stutzen 9 erfolgt die Entleerung des Filterbehälters sowie gegebenenfalls die Restvolumenfiltration. Selbstverständlich ist auch eine andere konstruktive Ausgestaltung des Druckfilters möglich, bei der die Stutzen 5 und 9 nicht in den Stutzen 8, sondern direkt in den Abschluß 3 münden.

Die Vorteile des erfindungsgemäßen Druckfilters lassen sich im wesentlichen wie folgt zusammenfassen:

– Jedes Filterelement kann einzeln auf einfache Weise demontiert und ausgetauscht werden, ohne daß eine Behälterhaube demontiert werden muß.

– Da die Behälterdecke eben und stabil ist, kann sie zur Reparatur gut begangen werden.

– An einzelnen Filterelementen auftretende Defekte können leicht lokalisiert werden.

– Durch die Möglichkeit der Anwendung der Modulbauweise kann die Filterkapazität rasch und ohne große Schwierigkeiten veränderten Gegebenheiten angepaßt werden.

– Durch eine mögliche kastenförmige Bauweise kann eine optimale Raumausnutzung des Aufstellungortes erreicht werden.

– Hebezeuge oder ähnliche Einrichtungen werden zum Austausch der Filterelemente nicht benötigt.

– Der Ersatz von großen Behälterflanschdichtungen bei jeder Reparatur entfällt.

## Patentansprüche

1. Druckfilter, bestehend aus zwei oder mehreren, jeweils in einem Einzelrohr vertikal angeordneten und von der zu filtrierenden Flüssigkeit von außen nach innen durchflossenen Filterelementen, wobei die an ihrem unteren Ende offenen Einzelrohre in einen gemeinsamen Abschluß münden, der mit der Eintrittsleitung für die zu filtrierende Flüssigkeit in Verbindung steht, dadurch gekennzeichnet, daß die Einzelrohre (1) in maximaler Packungsdichte miteinander fest verbunden sind und jedes Filterelement (2) über eine eigene, ihm zugeordnete Austrittsleitung (6) mit der außerhalb des Druckfilters angeordneten Filtratsammelleitung (7) verbunden ist.

2. Druckfilter nach Anspruch 1, dadurch gekennzeichnet, daß die Einzelrohre (1) einen runden, ovalen oder eckigen Querschnitt aufweisen.

3. Druckfilter nach den Ansprüchen 1 und 2, dadurch gekennzeichnet, daß derselbe aus mehreren, getrennt voneinander zu- und abschaltbaren Modulen zusammengesetzt ist, wobei jedes Modul aus zwei oder mehreren Einzelrohren (1) mit den dazugehörigen Filterelementen (2) besteht und die Einzelrohre (1) jeweils eines Moduls in einen gemeinsamen Abschluß (3) münden.

4. Druckfilter nach den Ansprüchen 1 bis 3, dadurch gekennzeichnet, daß die Filterelemente (2) mit der Austrittsleitung (6) über eine Flanschverbindung am oberen Ende der Einzelrohre (1) befestigt werden.

5. Druckfilter nach den Ansprüchen 1 bis 4, dadurch gekennzeichnet, daß die Austrittsleitung (6) von einem Domstutzen (12) umgeben ist, der der Entlüftung und als Bypass sowie der Druckgaszufuhr dient.

6. Druckfilter nach den Ansprüchen 1 bis 5, dadurch gekennzeichnet, daß der gemeinsame Abschluß (3) als Konus oder in Form einer Halbkugel oder einer ähnlichen Bodenform ausgebildet ist.

7. Druckfilter nach den Ansprüchen 1 bis 6, dadurch gekennzeichnet, daß unterhalb der Einzelrohre (1) ein Austragsschaber (17) angeordnet ist, dessen Antriebswelle (18) durch eine unterhalb des Abschlusses (3) angeordnete Lager- und Dichteinheit (19) geführt wird.

8. Druckfilter nach den Ansprüchen 1 bis 7, dadurch gekennzeichnet, daß der Austragsschaber (17) ein- oder mehrflügelig ausgebildet ist.

9. Druckfilter nach den Ansprüchen 1 bis 8, dadurch gekennzeichnet, daß der Austragsschaber (17) durch ein außerhalb des Druckfilters angeordnetes Antriebselement angetrieben wird.

**Claims**

1. Pressure filter consisting of two or more filter elements each of which is positioned vertically in an individual tube and through each of which the liquid to be filtered flows from the outside to the inside, the individual tubes which are open at their lower ends opening into a common closure which is connected to the inlet line for the liquid to be filtered, characterised in that the individual tubes (1) are rigidly attached to one another with the maximum packing density and each filter element (2) is joined, by an outlet line (6) allocated individually to it, to the filtrate collection line (7) positioned outside the pressure filter.

2. Pressure filter according to Claim 1, characterised in that the individual tubes (1) have round, oval or angular cross-sections.

3. Pressure filter according to Claims 1 and 2, characterised in that the same is composed of a plurality of modules which can be switched on and off independently of one another, each module consisting of two or more individual tubes (1) with their associated filter elements (2) and each of the individual tubes (1) of a module opening into a common closure (3).

4. Pressure filter according to Claims 1 to 3, characterised in that the filter elements (2) are secured to the outlet line (6) with flange connections at the upper ends of the individual tubes (1).

5. Pressure filter according to Claims 1 to 4, characterised in that the outlet line (6) is enclosed by a domed connecting piece (12) which serves for venting and as a bypass, and for supplying compressed gas.

6. Pressure filter according to Claims 1 to 5, characterised in that the common closure (3) is formed as a cone or in the shape of a hemisphere or similar base shape.

7. Pressure filter according to Claims 1 to 6, characterised in that positioned below the individual tubes (1) is a discharge scraper (17), the drive shaft (18) of which is led through a bearing and sealing unit (19) positioned below the closure (3).

8. Pressure filter according to Claims 1 to 7, characterised in that the discharge scraper (17) is formed with one or more blades.

9. Pressure filter according to Claims 1 to 8, characterised in that the discharge scraper (17) is driven by a drive element positioned outside the pressure filter.

**Revendications**

1. Filtre-presse se composant de deux éléments filtrants ou davantage qui sont logés individuellement dans un tube à la verticale et sont traversés de l'extérieur vers l'intérieur par le liquide devant être filtré, tandis que les différents tubes, ouverts à leur extrémité inférieure, débouchent dans un organe terminal commun qui communique avec la conduite d'admission du liquide devant être filtré,
caractérisé par le fait que les différents tubes individuels (1) sont reliés solidairement entre eux avec la densité de regroupement maximale et que chaque élément filtrant (2) est relié, par l'intermédiaire d'une conduite (6) de sortie qui lui est affectée en propre, à la conduite (7) collectrice du filtrat disposée à l'extérieur du filtre-presse.

2. Filtre-presse suivant la revendication 1, caractérisé par le fait que les différents tubes individuels (1) présentent une section transversale ronde, ovalisée ou angulaire.

3. Filtre-presse suivant les revendications 1 et 2, caractérisé par le fait que celui-ci est assemblé à partir de plusieurs modules pouvant être mis en et hors service séparément les uns des autres, tandis que chacun des modules se compose de deux tubes individuels (1) ou davantage, avec les éléments filtrants (2) leur correspondant, et que les tubes individuels (1) d'un même module débouchent dans un organe (3) terminal commun.

4. Filtre-presse suivant les revendications 1 à 3, caractérisé par le fait que les éléments filtrants (2) sont fixés à la conduite (6) de sortie par l'intermédiaire d'un raccord par bride à l'extrémité supérieure des tubes individuels (1).

5. Filtre-presse suivant les revendications 1 à 4, caractérisé par le fait que la conduite (6) de sortie est entourée par un dôme (12) à tubulure qui sert à la purge du système et de bypass, ainsi que d'arrivée pour du gaz comprimé.

6. Filtre-presse suivant les revendications 1 à 5, caractérisé par le fait que l'organe (3) terminal commun est réalisé sous la forme d'un cône ou d'une demi-sphère ou de toute autre forme de fond analogue.

7. Filtre-presse suivant les revendications 1 à 6, caractérisé par le fait que, en contre-bas des tubes individuels (1), est montée une racle d'extraction (17) dont l'arbre (18) d'entraînement passe à travers une unité (19) qui, formant palier et étanchéité, est montée en-dessous de l'organe (3) terminal.

8. Filtre-presse suivant les revendications 1 à 7, caractérisé par le fait que la racle d'extraction (17) est réalisée à une ou plusieurs branches.

9. Filtre-presse suivant les revendications 1 à 8, caractérisé par le fait que la racle d'extraction (17) est entraînée par un organe moteur installé à l'extérieur du filtre-presse.

Fig. 1

Fig. 2

EP 0 347 620 B1

Fig. 4

Fig. 3

Fig. 5

Fig. 6

Fig. 7